## Europäisches Patentamt

## European Patent Office

## Office européen des brevets

(11) Veröffentlichungsnummer: **0 302 305**
**B1**

(12) **EUROPÄISCHE PATENTSCHRIFT**

(45) Veröffentlichungstag der Patentschrift:
**19.09.90**

(51) Int. Cl.⁵: **A47J 43/10**, A47J 43/28

(21) Anmeldenummer: **88111674.3**

(22) Anmeldetag: **20.07.88**

(54) Koch- oder Rührlöffel für den Küchengebrauch.

(30) Priorität: **21.07.87 DE 3724008**

(43) Veröffentlichungstag der Anmeldung:
**08.02.89 Patentblatt 89/6**

(45) Bekanntmachung des Hinweises auf die Patenterteilung:
**19.09.90 Patentblatt 90/38**

(84) Benannte Vertragsstaaten:
**AT CH DE ES GB IT LI NL SE**

(56) Entgegenhaltungen:
**DE-U- 1 872 524**
**GB-A- 690 860**
**US-A- 4 121 316**

(73) Patentinhaber: **W.F. KAISER U. CO. GMBH,**
**Elisenstrasse 5, D-5408 Nassau/Lahn(DE)**

(72) Die Erfinder haben auf ihre Nennung verzichtet

(74) Vertreter: **Vollbach, Hans, Dipl.-Ing. et al, Patentanwälte**
**Dipl.-Ing. Buschhoff Dipl.Ing Hennicke Dipl.-Ing.**
**Vollbach Kaiser-Wilhelm-Ring 24, D-5000 Köln 1(DE)**

ACTORUM AG

## Beschreibung

Die Erfindung betrifft einen Koch- oder Rührlöffel für den Küchengebrauch mit an einem Stiel angeordnetem flachen Löffelblatt, das mit einer an seiner Stirnfläche quer zur Achse des Löffelstiels verlaufenden, messerartig ausgebildeten Schabekante sowie mit einer zahnartig ausgebildeten Schabekante versehen ist.

Kochlöffel gehören in der Küche bekanntlich zu den unverzichtbaren Arbeitsgeräten. Sie werden zumeist nicht oder nicht in erster Linie als Schöpfgeräte verwendet, sondern vielmehr als Rührgeräte. Die bekannten Kochlöffel werden einstückig aus Holz oder auch aus Kunststoff gefertigt. Sie weisen im allgemeinen ein rundes oder ovales Löffelblatt auf, das mit einer flachen Löffelmulde oder auch mit einer z.B. runden oder ovalen Durchbrechung versehen ist.

Aus der DE-U 72 30 443 ist ein speziell als Nudellöffel ausgebildeter Mehrzwecklöffel bekannt, dessen mit dem Stiel einstückig verbundenes flaches Löffelblatt an mindestens einer seiner beiden Seitenkanten eine Zahnung aufweist, so daß mit dem Kochlöffel auch lange und glatte Bandnudeln oder Spaghetti leicht aus dem Kochtopf herausgehoben werden können. Die Bandnudeln, die sonst über den Löffelrand herabgleiten würden, bleiben in den Zähnen hängen und können daher beim Herausheben nicht in den Kochtopf zurückgleiten. Der zentrale Bereich des Löffelblattes ist durchlöchert, so daß der Wasserwiderstand des Löffelblattes verringert wird und Tropföffnungen gebildet werden. Schließlich weist der bekannte Löffel eine schmale, schräggestellte Stirnkante auf, so daß er sich auch nach Art eines Schabers verwenden läßt, um z.B. Einlagen abzuschaben, die an der Kante zwischen der Seitenwand und dem Boden des Tropfes haften. Der Löffel mit seinem zylindrischen Löffelstiel wird aus Kunststoff oder auch aus Aluminium oder Holz hergestellt.

Weiterhin ist aus dem DE-U 18 72 524 ein Rührlöffel aus Kunststoff bekannt, bei dem an der Stirnkante des Löffelblattes eine Metallarmierung angeordnet ist, um beim Rühren in einem heißen Topf eine Kantenbeschädigung des Löffelblattes zu vermeiden.

Die US-A 3 059 252 beschreibt einen Mehrzwecklöffel aus Metall, der als Meßlöffel ausgebildet ist und zu diesem Zweck an seinem Löffelblatt mehrere Meßmulden aufweist. Außerdem ist das Löffelblatt mit Tropföffnungen sowie mit einer seitlichen Zahnkante versehen, um den Löffel auch für das Schneiden von Kleingut verwenden zu können.

Schließlich gehört durch das DE-U 72 12 953 ein löffelartiges Mehrzweck-Küchengerät zum Stand der Technik, dessen am Stiel angeordnetes, mit Durchbrechungen und einer Hobelschneide versehenes Plache Blatt nach Art eines Spatelblattes ausgebildet ist, dessen quer zur Stielachse verlaufende Stirnfläche als messerartige Schabekante ausgeführt ist. Die eine Seitenkante des Spatelblattes bildet eine wellenförmige Schneide, während die andere Seitenkante des Spatelblattes als zahnartig ausgebildete Schabekante ausgeführt ist. Mit Hilfe der wellenförmigen Schneide soll ein rasches und sauberes Entschuppen von Fischen ermöglicht werden.

Aufgabe der Erfindung ist es, einen Koch- oder Rührlöffel der genannten Art, der vorzugsweise als einfaches und preiswertes Gerät aus Kunststoff gefertigt wird, mit einfachen Mitteln in seinen Gebrauchseigenschaften derart zu verbessern, daß er bei Bedarf auch als besonders wirksames Schabegerät verwendbar ist, insbesondere zum Lösen von am Topfboden oder Topfrand anhaftenden Massen.

Die vorgenannte Aufgabe wird erfindungsgemäß dadurch gelöst, daß die messerartige Schabekante und die gezahnte Schabekante etwa parallel zueinander an der Stirnfläche des Löffelblattes angeordnet sind.

Vorteilhafte Ausbildungen der Erfindung sind in den abhängigen Ansprüchen 2 bis 11 dargestellt.

Der erfindungsgemäße Koch- und Rührlöffel weist also an seiner Stirnkante zwei parallel zueinander verlaufende Arbeits- bzw. Schabekanten auf, von denen die eine eine messerartige Schneide und die andere eine gezahnte Schabekante bildet und die je nach Bedarf zur Anwendung zu bringen sind. Da beide Schabekanten sich an der Stirnkante des Messerblattes befinden, ergibt sich nicht nur eine einfache und auch preiswerte Fertigung des Löffels, sondern auch eine einfache, ergonomisch günstige Handhabung des Löffels, da mit der am Stiel anliegenden Arbeitshand eine für das Loslösen von Topfanhaftungen ausreichend große axiale Kraft auf die Schabekanten und damit auf das zu lösende Gut mühelos ausgeübt werden kann. Die Anordnung der beiden parallelen Schabekanten bietet insbesondere die Möglichkeit, am Topfboden oder auch am Topfrand anhaftende Massen, die beim Braten, Kochen oder Dünsten von Fleisch häufig zur Saucenzubereitung verwendet werden, rasch und mühelos zu lösen, wobei die anhaftenden Massen zunächst mit Hilfe der Zahnkante angekratzt und aufgelockert und anschließend mit Hilfe der glatten Schneidekante flächig abgelöst werden. Damit erhält der Koch- und Rührlöffel für den Küchengebrauch wertvolle zusätzliche Gebrauchseigenschaften.

In bevorzugter Ausführung ist zwischen den Schabekanten eine sie ausbildende Hohlkehle angeordnet, die zweckmäßig so ausgeformt ist, daß ihre eine Begrenzungskante die gezahnte Schabekante und ihre andere Begrenzungskante die schneidenartige Schabekante bildet. Die beiden Schabekanten lassen sich durch Einarbeiten der Hohlkehle am Stirnrand des Löffelblattes einfach und ohne besonderen Aufwand herstellen. Dies gilt insbesondere dann, wenn der Löffel mit den an seinem Löffelblatt stirnseitig angeordneten Schabekanten aus einem harten Kunststoffmaterial gefertigt wird. Der Kunststoff sollte hinreichend hart und zäh sein, um ausreichend scharfkantige und verschleißfeste Schabekanten zu erhalten. Mit der Anordnung bzw. Anformung der Hohlkehle wird im übrigen auch der Schabeeffekt verbessert.

Für die Handhabung des erfindungsgemäßen Löffels vorteilhaft ist es ferner, wenn die Schabekanten etwa geradlinig verlaufen, vorzugsweise etwa über die gesamte Länge der Stirnkante des Löffelblattes, ggf. auch bis in den Bogenbereich zur Seitenkante des Löffelblattes. Das Löffelblatt wird im übrigen zweckmäßig so ausgeführt, daß es durch zwei etwa parallele Seitenkanten begrenzt ist, die über Eckrundungen in die etwa rechtwinklig zu ihnen verlaufende Stirnkante übergehen, welche die Schabekanten aufweist.

Anstatt die Schabekanten einstückig am Löffelblatt anzuformen, kann am Löffelblatt aber auch ein Ansatzstück aus Metall oder Kunststoff befestigt werden, welches die Schabekanten aufweist. Das Ansatzstück besteht hierbei zweckmäßig aus einer schmalen Kantenleiste, die mit einer die Schabekanten bildenden Hohlkehle versehen ist. Bei Anbringung eines die Schabekanten bildenden Ansatzstückes kann der Löffel auch einstückig aus Holz hergestellt werden.

Bei dem erfindungsgemäßen Löffel kann im übrigen das Löffelblatt, wie üblich, mit einer flachen Löffelmulde oder aber auch mit einer durchgehenden Innenöffnung versehen werden. Löffel der letztgenannten Art werden bevorzugt als Teiglöffel beim Backen verwendet.

Für die Handhabung des erfindungsgemäßen Löffels vorteilhaft ist es, wenn der Löffelstiel sich zum Löffelblatt hin konisch verdickt. Das Löffelblatt erhält zweckmäßig eine Dicke, die nicht größer ist als die Dicke des Löffelstiels an der Übergangsstelle zum Löffelblatt.

Die Erfindung wird nachfolgend im Zusammenhang mit den in der Zeichnung dargestellten Ausführungsbeispielen näher erläutert. In der Zeichnung zeigen:

Fig. 1 einen erfindungsgemäßen Koch- bzw. Rührlöffel in Seitenansicht;
Fig. 2 den Löffel nach Fig. 1 in Draufsicht;
Fig. 3 den Löffel nach den Fig. 1 und 2 in einer Rückansicht;
Fig. 4 ein zweites Ausführungsbeispiel eines erfindungsgemäßen Löffels im Längsschnitt durch das Löffelblatt;
Fig. 5 den Löffel nach Fig. 4 in einer Rückansicht.

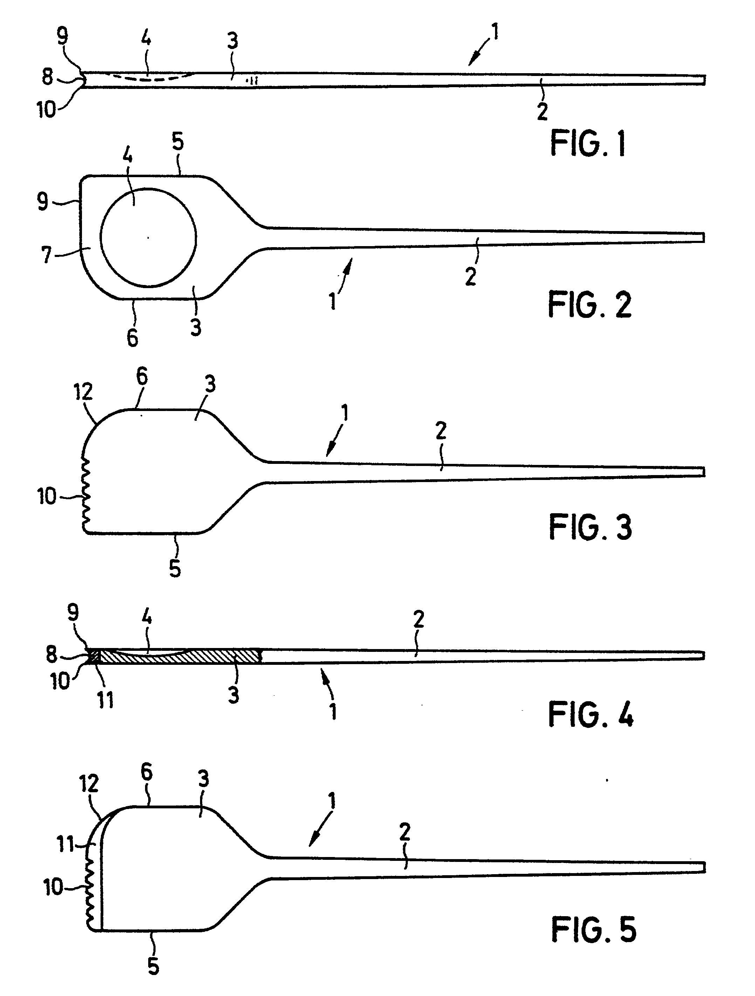

Der in den Fig. 1 bis 3 dargestellte Koch- bzw. Rührlöffel 1 ist mit seinem Stiel 2 und seinem flachen Löffelblatt 3 einstückig aus Kunststoff gefertigt. Das Löffelblatt 3, dessen Dicke nicht größer ist als die Dicke des Stieles 2 an der Übergangsstelle zum Löffelblatt, weist, wie bekannt, eine flache kreisrunde Löffelmulde 4 auf. Das Löffelblatt 3 ist im Umriß grob angenähert etwa trapezförmig geformt und wird durch die beiden etwa parallelen Seitenkanten 5 und 6 begrenzt, die über Eckrundungen in eine etwa rechtwinklig zu ihnen und zur Löffelachse verlaufende Stirnkante 7 übergehen. An der Stirnkante 7 ist gemäß Fig. 1 eine Hohlkehle 8 so in das Kunststoffmaterial eingearbeitet bzw. eingeformt, daß hierdurch mit der Ober- und Unterseite des Löffelblattes 3 jeweils eine Schabekante 9 bzw. 10 gebildet wird. Die obere Schabekante 9 ist als (ungezahnte) durchgehende Schneide ausgebildet, während die untere Schabekante 10, wie vor allem der Fig. 3 zu entnehmen, als gezahnte Schabekante ausgeführt ist. Die beiden Schabekanten 9 und 10 verlaufen parallel zueinander und geradlinig über die Stirnkante 7 des Löffelblattes. Letzteres ist mit seinem Stiel 2 aus einem harten und ausreichend zähen Kunststoff gefertigt, so daß sich verhältnismäßig scharfkantige und verschleißfeste Schabekanten 9 und 10 bilden lassen.

Beim Gebrauch kann mit Hilfe der gezahnten Schabekante 10 am Boden oder an der Innenwand eines Topfes oder eines sonstigen Gefäßes anhaftendes Gut angekratzt und leicht aufgelockert werden, so daß es sich anschließend mit Hilfe der schneidenartigen Schabekante 9 flächig von dem Boden bzw. der Innenwand abtrennen läßt. Um insbesondere im Hinblick auf den Schabe- und Löseeffekt die Griffigkeit des Löffels zu erhöhen, wird dessen Stiel 2 zweckmäßig konisch derart ausgeführt, daß er sich vom freien Stielende zum Löffelblatt 3 hin im Durchmesser verdickt.

Der in den Fig. 4 und 5 gezeigte Koch- bzw. Rührlöffel unterscheidet sich von demjenigen nach den Fig. 1 bis 3 im wesentlichen nur dadurch, daß an der Stirnkante des Löffelblattes 3 ein gesondertes Ansatzstück 11 aus Metall oder Kunststoff angebracht ist, das mit der Hohlkehle 8 und den Schabekanten 9 und 10 versehen ist. Das Ansatzstück besteht aus einer schmalen Kantenleiste, die an der Stirnkante des Löffelblattes eine Kantenschutzleiste bildet. Sie wird z.B. durch Kleben, durch Verstiftung od.dgl. am Löffelblatt 3 befestigt. Auch bei der Ausführungsform nach den Fig. 4 und 5 wird der Löffel 1 vorzugsweise aus Kunststoff gefertigt, obwohl er auch aus Holz hergestellt werden könnte.

Die Schabekanten 9 und 10 können sich über eine Teillänge der Stirnkante 7 des Löffelblattes oder auch im wesentlichen über die gesamte Stirnkante 7, ggf. auch bis in die Eckrundung 12 oder über diese Eckrundung 12 hinweg erstrecken. Anstelle der flachen Löffelmulde 4 kann das Löffelblatt 3 auch mit einer z.B. runden oder ovalen Innenöffnung versehen werden, wie dies bei Back- bzw. Teiglöffeln bekannt ist.

**Patentansprüche**

1. Koch- oder Rührlöffel (1) für den Küchengebrauch mit an einem Stiel (2) angeordnetem flachen Löffelblatt (3), das mit einer an seiner Stirnfläche (7) quer zur Achse des Löffelstiels verlaufenden, messerartig ausgebildeten Schabekante (9) sowie mit einer zahnartig ausgebildeten Schabekante (10) versehen ist, **dadurch gekennzeichnet,** daß die messerartige Schabekante (9) und die gezahnte Schabekante (10) etwa parallel zueinander an der Stirnfläche (7) des Löffelblattes (3) angeordnet sind.

2. Löffel nach Anspruch 1, **dadurch gekennzeichnet,** daß zwischen den Schabekanten (9, 10) eine sie ausbildende Hohlkehle (8) angeordnet ist.

3. Löffel nach Anspruch 2, **dadurch gekennzeichnet,** daß die Hohlkehle (8) so ausgeformt ist, daß ihre eine Begrenzungskante die gezahnte Schabekante (10) und ihre andere Begrenzungskante die schneidenartige Schabekante (9) bildet.

4. Löffel nach einem der Ansprüche 1 bis 3, **dadurch gekennzeichnet**, daß das Löffelblatt (3) mit den Schabekanten (9, 10) aus zäh-hartem Kunststoff besteht.

5. Löffel nach einem der Ansprüche 1 bis 4, **dadurch gekennzeichnet**, daß die Schabekanten (9, 10) etwa geradlinig verlaufen.

6. Löffel nach einem der Ansprüche 1 bis 5, **dadurch gekennzeichnet**, daß sich die Schabekanten (9, 10) etwa über die gesamte Länge der Stirnkante (7) des Löffelblattes (3), ggf. bis in den Bogenbereich (12) zur Seitenkante (6) des Löffelblattes (3) erstrecken.

7. Löffel nach einem der Ansprüche 1 bis 6, **dadurch gekennzeichnet**, daß der Löffelstiel (2) sich zum Löffelblatt (3) hin konisch verdickt.

8. Löffel nach einem der Ansprüche 1 bis 7, **dadurch gekennzeichnet**, daß das Löffelblatt (3) durch zwei etwa parallele Seitenkanten (5, 6) begrenzt ist, die über Eckrundungen in die etwa rechtwinklig zu ihnen verlaufende Stirnkante (7) übergehen, welche die Schabekanten (9, 10) aufweist.

9. Löffel nach einem der Ansprüche 1 bis 8, **dadurch gekennzeichnet**, daß die Schabekanten (9, 10) an einem am Löffelblatt (3) angebrachten Ansatzstück (11) aus Metall oder Kunststoff angeordnet sind.

10. Löffel nach Anspruch 9, **dadurch gekennzeichnet**, daß das Ansatzstück (11) aus einer Kantenleiste od.dgl. besteht, die mit einer die Schabekanten (9, 10) ausbildenden Hohlkehle (6) versehen ist.

11. Löffel nach einem der Ansprüche 1 bis 10, **dadurch gekennzeichnet**, daß das Löffelblatt (3), wie bekannt, mit einer Löffelmulde (4) oder einer durchgehenden Löffel-Innenöffnung versehen ist.

## Revendications

1. Cuiller de cuisson et de brassage, utilisable pour la cuisine, présentant une spatule plane montée sur un manche et dont la surface frontale présente une arête de raclage en forme de couteau, s'étendant perpendiculairement à l'axe du manche, comme aussi une arête de raclage dentelée, caractérisée par le fait que l'arête de raclage en forme de couteau (9) et l'arête de raclage dentelée (11) sont disposées sensiblement parallèlement l'une à l'autre au bord frontal (7) de la spatule (3).

2. Cuiller suivant la revendication 1, caractérisée par le fait qu'elle présente une gorge située entre les arêtes de raclage (9, 10).

3. Cuiller suivant la revendication 2, caractérisée par le fait que la gorge (8) présente une forme telle que l'une des arêtes qui la limitent constitue l'arête de raclage dentelée (10) alors que l'autre arête qui la limite constitue ladite arête coupante (9).

4. Cuiller suivant l'une des revendications 1 à 3, caractérisée par le fait que la spatule (3) avec ses arêtes de raclage (9, 10) est en une matière synthétique dure.

5. Cuiller suivant l'une des revendications 1 à 4, caractérisée par le fait que les arêtes de raclage (9, 10) sont sensiblement rectilignes.

6. Cuiller suivant l'une des revendications 1 à 5, caractérisée par le fait que les arêtes de raclage (9, 10) s'étendent sensiblement sur toute la longueur du bord frontal (7) de la spatule (3), le cas échéant jusqu'à la zone arrondie (12) du bord latéral (6) de la spatule (3).

7. Cuiller suivant l'une des revendications 1 à 6, caractérisée par le fait que son manche (2) s'élargit de façon conique en direction de la spatule (3).

8. Cuiller suivant l'une des revendications 1 à 7, caractérisée par le fait que la spatule (3) est limitée par deux bords latéraux sensiblement parallèles (5, 6) qui se raccordent par des arrondis avec le bord frontal (7) qui leur est sensiblement perpendiculaire et qui présente les arêtes de raclage (9, 10).

9. Cuiller suivant l'une des revendications 1 à 8, caractérisée par le fait que les arêtes de raclage (9, 10) sont disposées sur une pièce (11) rapportée sur la spatule (3), en métal ou en matière synthétique.

10. Cuiller suivant la revendication 9, caractérisée par le fait que la pièce rapportée (11) consiste en une bande d'arêtes ou analogue qui présente les arêtes de raclage (9, 10) formant la gorge (6).

11. Cuiller suivant l'une des revendications 1 à 10, caractérisée par le fait que la spatule (3) présente, de façon connue en soi, une creusure (4) ou une ouverture intérieure traversante.

## Claims

1. Cooking or stirring spoon for kitchen use having a flat spoon blade which is arranged on a handle and is provided at its front end with a scraping edge, of knifelike design, which runs transversely to the axis of the spoon handle and with a scraping edge of tooth-like design, characterized in that the knife-like scraping edge (9) and the serrated scraping edge (10) are arranged approximately parallel to one another at the front edge (7) of the spoon blade (3).

2. Spoon according to Claim 1, characterized in that a groove (8) is arranged between the scraping edges (9, 10), which groove forms said scraping edges.

3. Spoon according to Claim 2, characterized in that the groove (8) is shaped in such a way that one of its boundary edges forms the serrated scraping edge (10) and its other boundary edge forms the cutter-like scraping edge (9).

4. Spoon according to one of Claims 1 to 3, characterized in that the spoon blade (3) having the scraping edges (9, 10) is composed of tough, hard plastic.

5. Spoon according to one of Claims 1 to 4, characterized in that the scraping edges (9, 10) run approximately rectilinearly.

6. Spoon according to one of Claims 1 to 5, characterized in that the scraping edges (9, 10) extend approximately over the entire length of the front edge (7) of the spoon blade (3), optionally into the curved region (12) with respect to the lateral edge (6) of the spoon blade (3).

7. Spoon according to one of Claims 1 to 6, characterized in that the spoon handle (2) widens out conically towards the spoon blade (3).

8. Spoon according to one of Claims 1 to 7, characterized in that the spoon blade (3) is bounded by two approximately parallel lateral edges (5, 6) which merge, via corner roundings, into the front edge (7) running approximately at right angles to them and which exhibits the scraping edges (9, 10).

9. Spoon according to one of Claims 1 to 8, characterized in that the scraping edges (9, 10) are arranged on an attachment piece (11) of metal or plastic which is fastened to the spoon blade (3).

10. Spoon according to Claim 9, characterized in that the attachment piece (11) is composed of an edge strip or the like which is provided with a groove (8) forming the scraping edges (9, 10).

11. Spoon according to one of Claims 1 to 10, characterized in that the spoon blade (3) is provided, as is know, with a spoon depression (4) or an inner opening passing through the spoon.

FIG. 1

FIG. 2

FIG. 3

FIG. 4

FIG. 5